# EUROPEAN PATENT APPLICATION

(11) **EP 1 588 838 A1**
(43) Date of publication of application: **26.10.2005**
(21) Application number: 05290892.8
(22) Date of filing: 22.04.2005
(51) Int. Cl.: B32B 5/28, B29C 70/46

(54) **Composite product and forming system**

(30) Priority: 23.04.2004 US 565255; 20.12.2004 US 17242
(71) Applicant: ASC INCORPORATED, Southgate, Michigan 48195 (US)
(72) Inventor: Formella, Stephen C., Canton, Michigan 48188 (US); George, Richard D., Riverview, Michigan 48192 (US); Funderburg, Michael, Allen Park, Michigan 48101 (US); Rose, Bobby R., Brownstown, Michigan 48134 (US)
(74) Representative: Hirsch & Associés

(57) **Abstract**

A composite product (51) and forming method are provided. Multiple layers of fiber, prepreg sheets (53, 57, 59, 61, 63, 65) are employed with an internal air channeling sheet (55) to create a composite or laminate product. A further aspect of the present invention uses compression molding (103, 105) to form composite parts made from prepreg sheets.

## Description

### BACKGROUND AND SUMMARY OF THE INVENTION

The present invention relates generally to composite products and forming systems for making such products and more particularly to create a composite from fiber, prepreg layers.

Composite materials have been commonly employed in the aerospace industry given the desirability for low weight, high strength and low thermal expansion structures. Most such composites are made by hand laying up multiple resin-impregnated fibrous layers, known as fiber prepregs, upon a mandrel or form at room-temperature. A vacuum bag and autoclave are then used to cure the composite in an oven. The typical autoclave and oven cycle time is generally in the range of two-to-two and one half hours, not including the time-consuming and expensive hand lay up process. Accordingly, such processes are usually limited to very low volume part production. Examples of traditional hand lay up, and autoclave and oven production methods are disclosed in the following U.S. Patent Application Publication Nos.: 2004/0053027 entitled "Method for the Production of a Laminate and Bent Product Consisting of Laminate" which was published to Labordus et al. on March 18, 2004; 2004/0051214 entitled "Co-Cured Vacuum-Assisted Resin Transfer Molding Manufacturing Method" which was published to Sheu et al. on March 18, 2004; and 2002/0022422 entitled "Double Bag Vacuum and Fusion Process and System for Low Cost, Advanced Composite Fabrication" which was published to Waldrop, III, et al. on February 21, 2002.

Various unsuccessful experiments have been made to use pre-heated, compression molds to form and cure large and contoured panels made from multiple layers of unidirectional fiber and/or woven fiber prepreg materials. Most, if not all, of these experimental panels exhibited unacceptable outside surface distortion and imperfections due to trapped air remaining within the part during molding. Such disadvantages are recognized for other attempts at compression molding and autoclave processing of prepreg parts, for example in the background section of U.S. Patent Application Publication No. 2003/0232176 entitled "Thermal Plastic Molding Process and Apparatus" which was published to Polk, Jr., et al. on December 18, 2003,.

In accordance with the present invention, a composite product and forming system are provided. In another aspect of the present invention, multiple layers of fiber, prepreg sheets are employed with an internal air channeling sheet to create a composite or laminate product. A further aspect of the present invention uses compression molding to form composite parts made from prepreg sheets. In yet another aspect of the present invention, carbon fiber panels are produced without use of an autoclave, which are essentially free of outside surface distortion caused by trapped air, which are used on automotive vehicles requiring a high quality surface finish.

In particular, the invention provides a method of manufacturing a laminate, the method comprising:
(a) placing an air permeable veil material between adjacent fibrous prepreg sheets, the veil material including non-metallic fibers of varied orientation;
(b) compressing the sheets and material together;
(c) curing the sheets without an autoclave;
(d) creating a rigid and three-dimensional part; and
(e) moving trapped air toward peripheral edges of the laminate with the assistance of the veil material during compression and curing.

Preferred embodiments thereof comprises one or more of the following features:
- at least one of the sheets is made of a woven carbon fiber, prepreg material;
- at least two of the sheets include carbon fiber and resin;
- at least an outer one of the sheets includes substantially unidirectional carbon fibers, the method further comprising applying a pigmented paint coating to the outer one sheet;
- creating a class A, automotive vehicle surface at an exposed surface of the sheets;
- compression molding the sheets together in a cycle time less than one hour and without requiring intermediate mold opening between a beginning and end of the compression molding cycle.

According to another aspect, the invention provides a method of making a composite, the method comprising:
(a) locating a first sheet of fiber prepreg at a position;
(b) locating a second sheet of a randomly oriented and air permeable material at the position in a stacked relationship to the first sheet;
(c) locating a third sheet of fiber prepreg at the position in a stacked relationship to the second sheet;
(d) compression molding the sheets together between preheated tools in an automated press; and
(e) moving trapped air toward peripheral edges of the composite, with the assistance of the second sheet, during molding.

Preferred embodiments thereof comprises one or more of the following features:
- the first sheet is made of a woven carbon fiber, prepreg material;
- applying a clear coating to at least one outside surface of the composite after molding;
- the first sheet is compressed directly by one of the tools, the tools being metallic;
- at least one of the first and third sheets include carbon fiber and resin;
- the first sheet includes substantially unidirectional carbon fibers, the method further comprising applying a pigmented paint coating to the first sheet after molding;
- creating a class A, automotive vehicle surface at the exposed surface of the first sheet;
- compression molding the sheets together in a cycle time less than one hour and without requiring intermediate tool opening between a beginning and end of the compression molding cycle, the tools comprising a pair of match metal dies of three-dimensional shape;

According to still another aspect, the invention provides a layered composite part obtainable by or made in accorance with the method comprising:
(a) locating a first sheet of fiber prepreg at a position;
(b) locating a second sheet of a randomly oriented and air permeable material at the position in a stacked relationship to the first sheet;
(c) locating a third sheet of fiber prepreg at the position in a stacked relationship to the second sheet;
(d) compression molding the sheets together between preheated tools preferably in an automated press; and
(e) moving trapped air toward peripheral edges of the composite, with the assistance of the second sheet, during molding.

Preferred embodiments thereof comprises one or more of the following features:
- the molded sheets define an automotive vehicle, exterior body panel;
- the panel has a class A automotive vehicle surface;
- the first sheet is a woven carbon fiber, prepreg material;
- the composite part further comprises a clear coating located on an outside surface of the first sheet after molding such that a checkerboard-like pattern of the woven material is visible from outside the vehicle;
- at least one of the first and third sheets is a unidirectional carbon fiber prepreg material;
- both the first and third sheets are unidirectional fiber prepreg materials.
- the sheets are molded together without an auto clave and without a vacuum;
- the compression molding cycle time is less than one hour, the tools are closed during the entire molding cycle, and the tools include a metal cavity and a metal core.

According to still another aspect, the invention provides a panel comprising:
- a first sheet including fiber and resin;
- a second sheet of fibrous veil material being air permeable and non-metallic; and
- a third sheet including fiber and resin, the first and third sheets sandwiching the second sheet in a stacked manner;
wherein the panel is formed by joining the sheets with the second sheet allowing trapped air to move toward peripheral edges of the panel during joining of the sheets.

Preferred embodiments thereof comprises one or more of the following features:
- the joined sheets define an automotive vehicle, exterior body panel;
- the first sheet has a class A automotive vehicle surface after joining;
- the first sheet is a woven carbon fiber, prepreg material;
- the panel further comprises a clear coating located on an outside surface of the first sheet such that a checkerboard-like pattern of a woven material is visible from outside the vehicle;
- at least one of the first and third sheets is a unidirectional carbon fiber prepreg material;
- both the first and third sheets are unidirectional fiber prepreg materials.
- the panel is formed by joining the sheets with the sheets being compression molded together without an auto clave and without a vacuum;
- the panel is formed by joining the sheets by compression molding in an automated press, a compression molding cycle time being less than one hour and a metal cavity and a metal core are closed during the entire molding cycle.

According to still another aspect, the invention provides a method of manufacturing an automotive vehicle panel from a layered composite, the method comprising:
(a) locating a first sheet of fiber prepreg at a position;
(b) locating a second sheet of fibrous veil material at the position in a stacked relationship to the first sheet;
(c) locating a third sheet of fiber prepreg at the position in a stacked relationship to the second sheet;
(d) locating at least a fourth sheet of fiber prepreg material at the position in a stacked relationship to the third sheet, the second and third sheets being located between the first and fourth sheets;
   the second sheet having different characteristics than the first, third and fourth sheets;
(e) orienting the fourth sheet so a majority of its fibers are angularly offset from a majority of fibers in the third sheet;
(f) compression molding the sheets together between preheated tools and without an autoclave; and
(g) moving trapped air toward peripheral edges of the composite, with the assistance of the second sheet, during molding.

Preferred embodiments thereof comprises one or more of the following features:
- the first sheet is made of a woven carbon fiber, prepreg material;
- applying a clear coating to at least one outside surface of the composite after molding;
- the first sheet is compressed directly by a cavity tool;
- the fourth sheet is compressed directly by a cavity tool;
- the veil material includes non-metallic fibers of random orientation which allow for significant air permeability and flow in all directions prior to molding;
- at least one of the first, third and fourth sheets include carbon fiber and resin;
- the first sheet includes substantially unidirectional carbon fibers, further comprising applying a paint coating to the first sheet after molding;
- creating a class A, automotive vehicle surface at an exposed surface of the first sheet;
- compression molding the sheets together in a cycle time less than one hour and without requiring intermediate mold opening between a beginning and end of the compression molding cycle, the tools comprising a pair of match metal dies of three-dimensional shape.

According to still another aspect, the invention provides a method of manufacturing a layered composite part, the method comprising:
(a) creating a layered composite sandwich from fiber prepreg sheets;
(b) compression molding the sheets together between a metal cavity and a metal core; and
(c) employing a compression molding cycle time of less than one hour in an automatically actuated press.

Preferred embodiments thereof comprises one or more of the following features:
- directly compressing one of the sheets by the cavity;
- directly compressing another of the sheets by the core;
- place a veil material between at least one pair of the prepreg sheets prior to molding;
- at least one of the sheets is made of a woven carbon fiber, prepreg material;
- applying a clear coating to at least one outside surface of the composite part after molding;
- placing a veil material in the sandwich, wherein the veil material includes non-metallic fibers of varied orientation which allow for significant air permeability and flow in all directions prior to molding;
- at least two of the sheets include carbon fiber and resin;
- at least an outer one of the sheets includes substantially unidirectional carbon fibers, the method further comprising applying a pigmented paint coating to the outer one sheet;
- creating a class A, automotive vehicle surface at an exposed surface of the sheets;
- compression molding the sheets together in a cycle time less than one hour and without requiring intermediate mold opening between a beginning and end of the compression molding cycle.

According to still another aspect, the invention provides a method of making an automotive vehicle panel from a layered composite, the method comprising:
(a) stacking multiple carbon fiber prepreg sheets upon each other;
(b) placing a non-metallic, fibrous and air permeable material between at least a pair of the prepreg sheets; and
(c) compression molding the sheets together in an automated press to create the automotive vehicle panel having a three-dimensionally curved and rigid configuration.

Preferred embodiments thereof comprises one or more of the following features:
- the air permeable material is a sheet having randomly oriented glass fibers;
- at least one of the sheets is made of a woven carbon fiber, prepreg material;
- at least two of the sheets include carbon fiber and resin;
- at least an outer one of the sheets includes substantially unidirectional carbon fibers, the method further comprising applying a pigmented paint coating to the outer one sheet;
- creating a class A, automotive vehicle surface at an exposed surface of the sheets;
- compression molding the sheets together in a cycle time less than one hour and without requiring intermediate mold opening between a beginning and end of the compression molding cycle;
- the panel is a hood substantially free of trapped air voids adjacent an outer surface.

According to still another aspect, the invention provides an automotive vehicle body panel comprising:
- a first sheet of fiber prepreg;
- a second sheet of material including randomly oriented fibers;
- a third sheet of fiber prepreg, the first and third sheets sandwiching the second sheet in stacked manner; and
- a fourth carbon fiber prepreg sheet stacked upon the third sheet, the third and fourth sheets including unidirectional carbon fibers oriented in offset directions from each other;
the second sheet allowing trapped air to move toward peripheral edges of the panel during molding of the sheets; and
the first sheet defining a class A automotive vehicle surface substantially free of visible air voids.

Preferred embodiments thereof comprises one or more of the following features:
- the first sheet is a woven carbon fiber, prepreg material;
- the panel further comprises a clear coating located on an outside surface of the first sheet such that a checkerboard-like pattern of a woven material is visible from outside the vehicle;
- both the first and third sheets are unidirectional carbon fiber prepreg materials;
- the sheets are compression molded together without an auto clave and without a vacuum;
- the sheets are joined by compression molding in an automated press, the compression molding cycle time is less than one, hour and a metal cavity and a metal core are closed during the entire molding cycle.

The composite product and forming system of the present invention are advantageous over traditional products and methods of creating same since the present invention parts can be produced in high volume, at relatively low cost, and exhibit superior surface finish characteristics. The present invention advantageously causes movement of undesirably trapped air or other gases away from one or more exterior surfaces of the composite part and toward the peripheral edges of the part. The cycle time of the present invention is significantly faster than that achieved with conventional processes since a vacuum bag and autoclave are not required. Structural integrity of the present invention is also improved due to reduction of trapped air and voids in the composite part. Additional advantages and features of the present invention will become apparent from the following description and appended claims, taken in conjunction with the accompanying drawings.

### BRIEF DESCRIPTION OF THE DRAWINGS

Figures 1 and 2 are perspective views showing both preferred embodiments of composite products of the present invention used to make various body panels of an automotive vehicle;
Figure 3 is a top elevational view showing a first preferred embodiment composite product employed as a hood panel;
Figure 4 is a cross sectional view, taken along line 4-4 of Figure 3, showing the first preferred embodiment composite product employed as the hood panel;
Figure 5 is a diagrammatic and exploded, side view showing the first preferred embodiment composite product and forming system;
Figure 6 is a fragmentary and exploded, perspective view showing the first preferred embodiment composite product;
Figure 7 is a fragmentary and exploded, perspective view showing a second preferred embodiment composite product of the present invention;
Figure 8 is a flow chart showing the processing steps employed with both preferred embodiment composite products and forming systems; and
Figure 9 is a diagrammatic, top view showing the process layout employed with both preferred embodiments of the composite product and forming system.

### DETAILED DESCRIPTION OF THE PREFERRED EMBODIMENTS

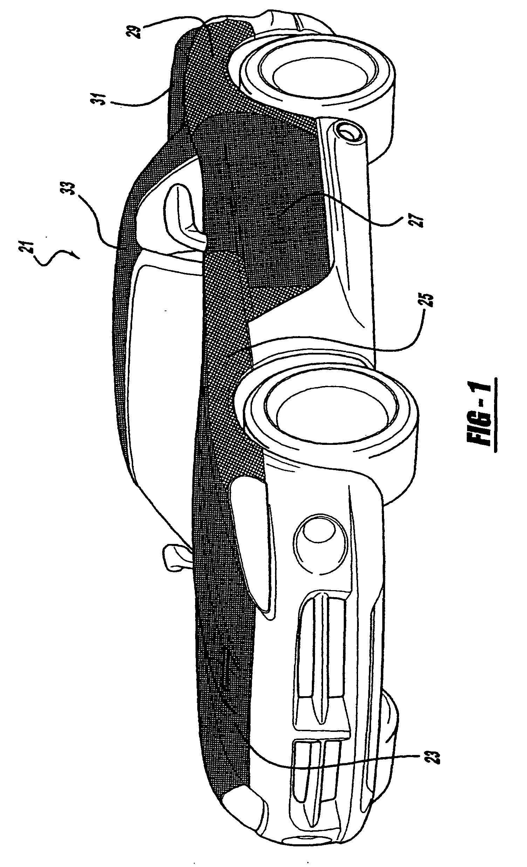

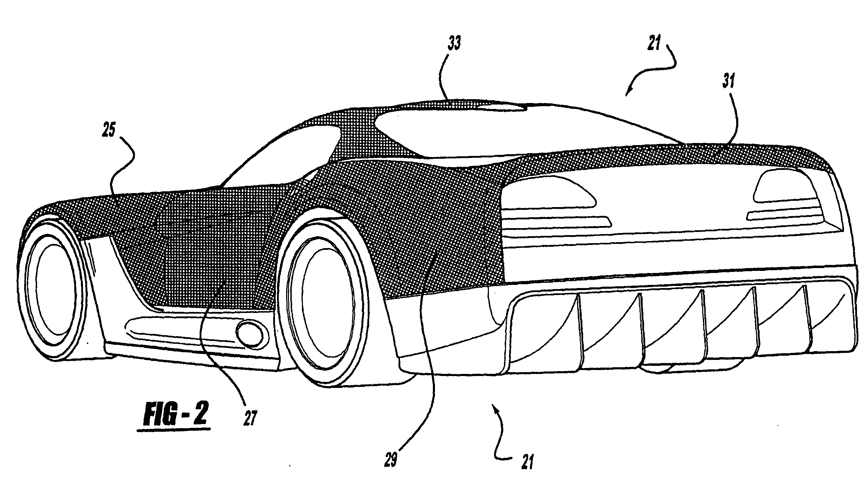

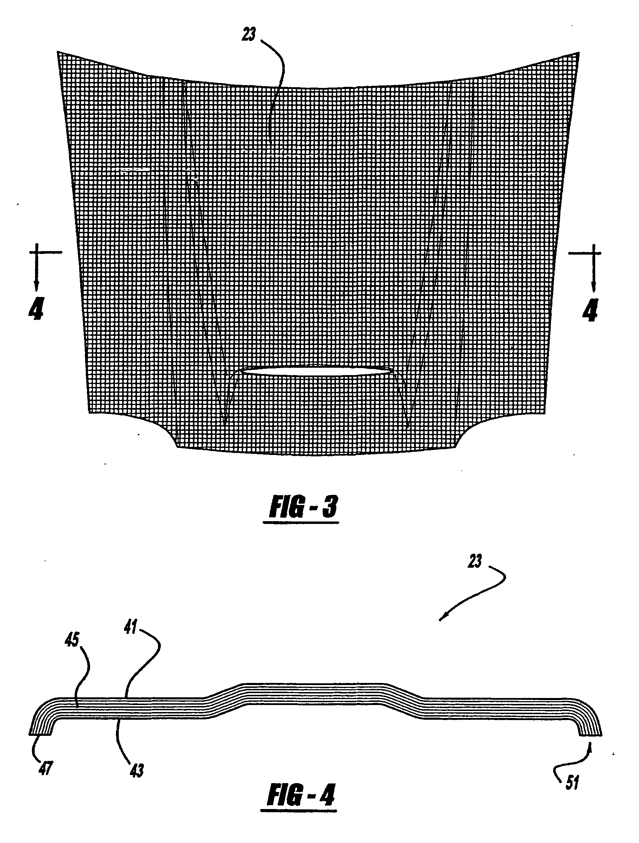

The composite product and forming system of the present invention is preferably used to create large body panels in an automotive vehicle 21. Referring to Figures 1-4, exemplary body panels include a three-dimensionally contoured hood outer panel 23, a hood inner panel, front fenders 25, door outer panels 27, door inner panels, rear fenders 29, deck lid inner and outer panels, spoilers 31, a roof 33, and alternately, interior trim panels, smaller fuel filler doors, and exterior and interior garnish moldings. Hood 23 has outer surfaces 41 and 43 defined by multiple internal sheet layers 45 which are permanently affixed to each other during processing, and terminate at their peripheral edges 47. Peripheral edges 47 may be downwardly turned as shown, cut along generally vertical planes or provided with a partial radius by pinching then trimming. Outside surface 41 of composite hood product or part 23 is a class A exterior surface which must exhibit extremely high finish quality characteristics free of aesthetic blemishes and defects. Indeed, as is well known in the art, a class A automotive vehicle surface is a smooth panel surface finish generally free of visible defects, blemishes, voids and tool marks, ideally suited for aesthetic viewing when installed on the vehicle.

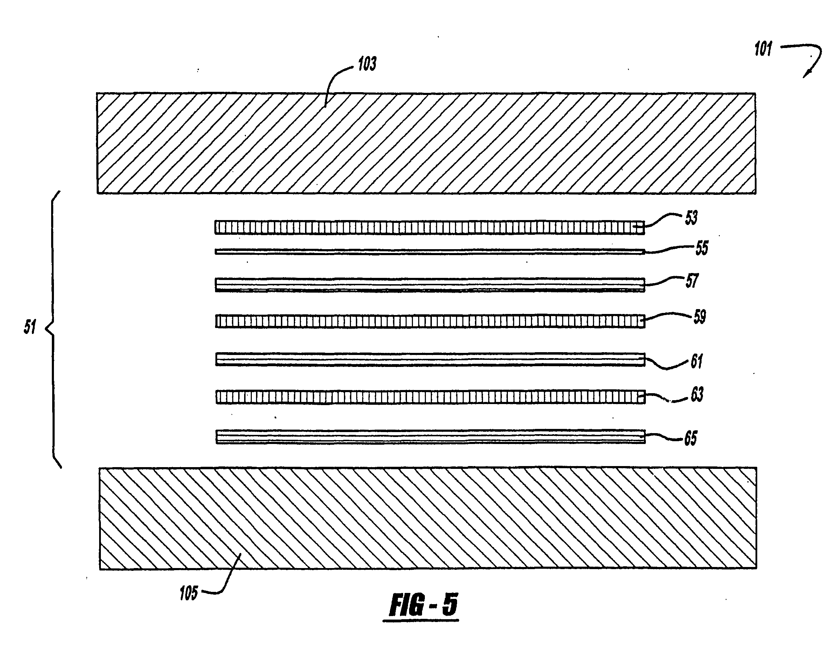

A first preferred embodiment of composite product 51 is shown in Figures 4-6. This embodiment employs a woven, carbon fiber, prepreg sheet 53 which, when coated, serves as the class A outside surface 41. The coating is optimally painted on using a clear coat for improving ultraviolet stability and gloss on the external face of first sheet 53. Woven sheet 53 has a visible, checkerboard-like pattern and is preferably obtained from Toray Composites (America), Inc., having a fiber format of T300S 3K, 2X2 twill fabric, with a G83C quick cure resin system, a fiber areal weight of about 380 g/m², and a resin content of about 45%; it should be appreciated that alternate materials may be used. A veil or scrim sheet 55 is located immediately adjacent to exterior first sheet 53. Veil sheet 55 is a non-woven, short or medium strand, continuous fiberglass material, that has a multi-directional and random, overlapping fibrous orientation which allows for significant air permeability and flow in all of its directions; veil sheet 55 is preferably obtained from Hollinee Co. as the Surmat SF100 176A-5, A-1100 product, with a 5% 176A binder resin, 18 micron filament thickness, 20 mil thickness and 28 g/m² arial weight. Alternately, a veil from Regina Glass Fibre Pty. Ltd. of Australia or other materials employing similar processing characteristics, may be used. A third sheet 57, which is a prepreg material having generally unidirectional, carbon fibers therein is located immediately adjacent veil sheet 55. A fourth sheet 59, being of a generally unidirectional, carbon fiber, prepreg material, is disposed adjacent third unidirectional sheet 57. Fifth, sixth and seventh sheets of generally unidirectional, carbon fiber, prepreg material, 61, 63 and 65, respectively (and only partially shown in Figure 6) are respectively located adjacent fourth sheet 59 and each other in a stacked fashion. The fiber orientations are angularly offset between adjacent layers to improve uniform structural rigidity throughout the entire composite product. For example, if third sheet 57 has a 0° directional orientation of fibers then fourth sheet 59 preferably has a 90° orientation, fifth sheet 61 has a 0° orientation, sixth sheet 63 has a 90° orientation and seventh sheet 65 has a 0° orientation. It is alternately envisioned that the angular orientations may vary depending upon the specific part requirements; for example, alternating +/-45° layering may be used for long and narrow parts, or alternating +60° and -30° layering may be provided for hood inner panels and the like. The unidirectional, carbon fiber, prepreg material is preferably obtained from Toray Composites (America), Inc. as Part No. P3831C-190-1000, having a fiber format designation of T600S 24K, unidirectional, with a G83C quick cure resin system, a fiber areal weight of about 190 g/m² and a resin content of about 38%.

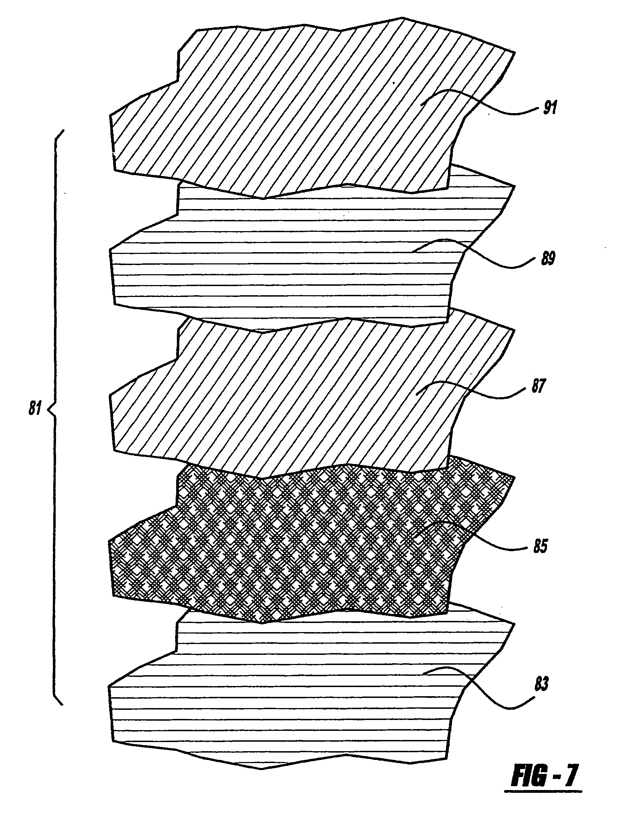

Referring to Figure 7, a second preferred embodiment composite product 81 is essentially the same as the first preferred embodiment composite 51 except that a generally unidirectional, carbon fiber, prepreg material is used for first sheet 83 in this second embodiment. A veil sheet 85 and additional unidirectional, prepreg sheets 87, 89, 91, and possibly others, are stacked adjacent the external first sheet 83, but accounting for a fiber orientation offset between first and third sheets 83 and 87, respectively. The outside surface of first sheet 83 is preferably coated with an opaque and pigmented paint, such as to match the body color of the vehicle.

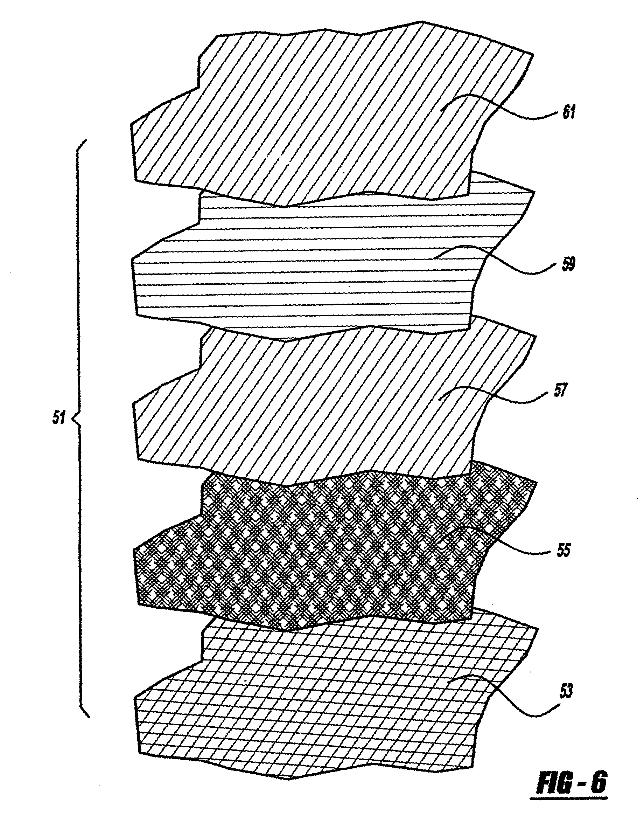

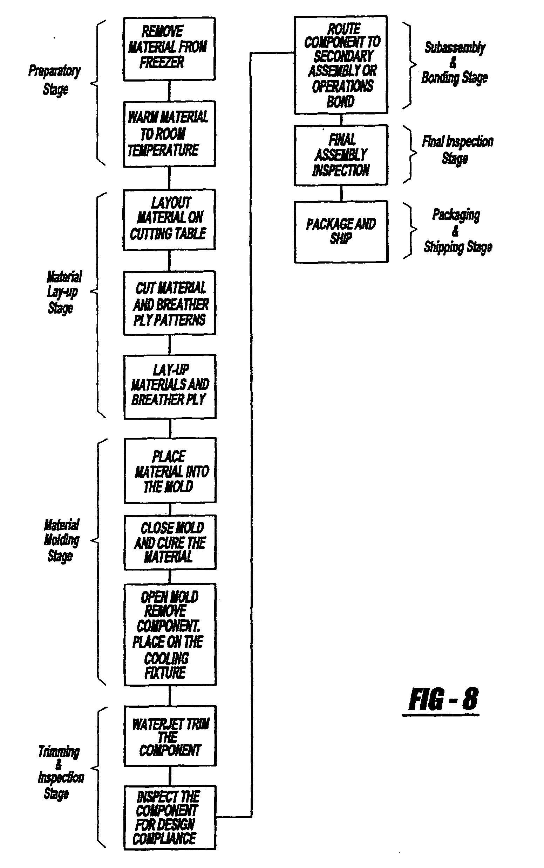

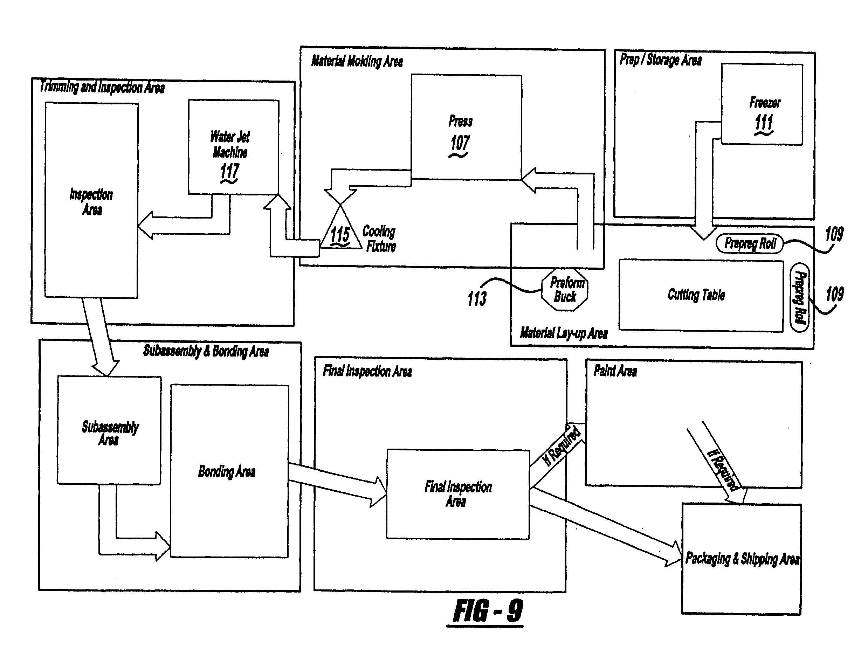

The preferred processing and forming system of the present invention will now be discussed with regard to both composite product embodiments, while referring to Figures 5, 8 and 9. A compression molding system 101 includes a vertically movable cavity tool 103 and a vertically stationary core tool 105 which are mounted to an automated press 107. A pair of cores 105 may be optionally mounted to a shuttle which will horizontally move one of the cores into the press for forming and curing while the other core is open for insertion loading of the pre-formed composite. The lay-up and molding locations preferably have a 30-40% relative humidity at 65-70 degrees Fahrenheit. Alternately, an automated press having horizontally moving platens or tools can be used. The processing steps for the forming system are as follows:

### Preparation Stage

1. Remove roll(s) 109 of prepreg material from a freezer 111 and allow thawing to room temperature.
2. Stage the roll(s) of prepreg material onto racks for cutting in the Material Lay-up Area.

### Material Lay-up Stage

3. Cut the prepreg material to the specified linear length desired for the composite part to be molded. Cut the appropriate number of sheets to correspond to the specified number of layers required to mold the composite part.
4. Lay-up the flat layers of prepreg material on a flat table, surface or buck 113, orientating the fiber direction appropriately for the composite part specification. This lay-up could be the complete number of layers or a portion of the required number of layers. One layer of the veil material is placed as the second material layer from the tool cavity surface (in other words, behind one layer of prepreg material).
5. If required by the part design to support proper fiber orientation, precut predetermined shapes from the lay-up in Step 4 that will completely cover the mold surface with the correct number of material layers and at the correct fiber orientation.
6. If required by the part design to support proper fiber orientation, hand lay-up the individual precut shapes from Step 5 onto a lay-up buck of the component to be molded.
7. Once lay-up is completed, wait until the mold is opened and the previous part is removed from the mold. Steps 3 through 6 are performed concurrently while the mold is shut to cure the previous material lay-up assembly.

### Material Molding Stage

8. Take the material (preformed if applicable) lay-up assembly from the lay-up area and place it into the mold core 105. The mold cavity and core temperatures are preferably about 265 +/- 35°F.
9. Close the preheated mold cavity 103 to cure the material lay-up controlling the closing speed to approximately five inches per minute. The material should be maintained in the forming mold for a nominal cycle time duration of about 27 +/-3 minutes for a tool temperature of 260 +/-10°F. Depending upon material resin system requirements, about 15 minute cycle times may be achieved for tool temperatures of about 300°F. Material lay-up of the next composite part is being performed while the mold is shut thereby curing the current part.
10. Open the mold after curing and remove the formed composite part. Place the part on a cooling fixture 115.
11. Remove the part from the cooling fixture once the part temperature has reached room temperature +/- 20°F and place it onto the in-process rack for raw parts. Once full, route the raw parts in-process rack to the Trimming and Inspection Area.

### Trimming and Inspection Stage

12. Remove the part from the in-process rack for raw parts and place it onto the trimming fixture. Trim the composite air bubble filled and resin rich periphery or awfall from the composite part on the fixture in accordance with the design requirements by use of a water jet cutting robot 117, or alternately a match metal die, router, saw or laser cutter. Place the trimmed part onto the in-process rack for trimmed parts.
13. Remove the part from the trimmed parts in-process rack and inspect the part for design compliance. If it is within specification for design compliance, place the part onto the in-process rack for inspected parts. If the part does not meet the specifications for design compliance, place the part onto the reject rack. Once all parts are trimmed and inspected, route the inspected in-process rack to the Bonding and Assembly Area.

### Bonding and Assembly Stage

14. Optionally remove the composite part from the inspected in-process rack and complete any required subassembly and/or bonding operations to other parts listed on the bill of materials. Place the assembled part onto the final assembly in-process rack. Once full, route the final assembly in-process rack to the Final Inspection Area.

### Final Inspection Stage

15. Remove the part assembly from the final assembly rack and perform the final assembly inspection for design compliance. If part assembly is within specification for design compliance, place the part onto the in-process rack for completed assemblies. If the part does not meet the specifications for design compliance, place the part onto the reject rack.
16. If required, route completed part assemblies to the Paint Area for paint coat processing as required.

### Packaging and Shipping Stage

17. Prepare the completed composite part assemblies for packaging and shipping per the customer's packaging and shipping requirements.

### Material Storage

18. Once molding operations have been completed and there is no further need for the prepreg material, place the remaining roll(s) of prepreg material in cold storage at 0°F.

The core and cavity tools are preferably machined from aluminum but may alternately be steel, carbon fiber composite, ceramic or other materials sufficient for compression molding. It is also envisioned that a programmable Gerber cutting head or, alternately a steel rule die, can be used with the optional step 5 to cut multiple blanks for placement into the tool. Moreover, it is envisioned that one or more air vents are located at the periphery of the cavity tool. Approximately 200-300 psi of force are applied by the compression molding press, although lesser or greater forces can be applied.

It is believed that the veil sheet serves to outwardly move and channel air from the center of the part toward its peripheral edges during heating and compression in the mold. The resin from the adjacent prepreg sheets appears to flow through the thickness of the veil sheet in order to create a satisfactorily fully bonded composite structure. The compression molding and forming process of the present invention advantageously allows for overlapping edges of side-by-side (in the roll width direction) sheets, used when the standard roll width is too narrow than the desired final product, but without creating a thicker final composite part; this is unlike a traditional autoclave, vacuum bag and oven process which creates an undesirably thicker and potentially wrinkled part at the overlap in this situation.

It is alternately envisioned that the number of unidirectional prepreg sheets can be varied in the laminate composite product depending upon the desired thickness and strength of the final composite product. For example, two, three, five or nine layers of unidirectional prepreg sheets may be used. In another alternate embodiment, the veil sheet is provided and located between every adjacent pair of prepreg sheets to further reduce and move trapped air from within the composite part. Additionally, it is alternately envisioned that the veil layer is employed with a vacuum bag and autoclave to reduce air and other gas voids within a composite part, although the majority of benefits achieved through the compression molding process of the present invention will not be realized. In another alternate variation, the composite product and forming system of the present invention is usable to create panels for airplanes, spacecraft, boats, motorcycle helmets, all terrain vehicles, and the like, although various advantages of the present invention's use with large, automotive vehicle panels may not be fully achieved.

While various embodiments of the composite product and forming system have been disclosed, it should be appreciated that variations may be made without departing from the present invention. For example, the prepreg layers may contain glass fiber, Kevlar fiber or a mixture of unidirectional, random or interwoven carbon, metallic, Kevlar and glass fibers. As used herein, automated pressures also include a hydraulically driven and electromechanically driven press even if initially started with a manually moved lever or electronic controls. While various materials, temperatures and processing parameters have been disclosed, it should be appreciated that alternate materials, temperatures and processing parameters may be employed as long as the desired function and advantages are achieved. It is intended by the following claims to cover these and any other departures from the disclosed embodiments which fall within the true spirit of this invention.

## Claims

1. A method of manufacturing a laminate, the method comprising:
(a) placing an air permeable veil material (55; 85) between adjacent fibrous prepreg sheets (53, 57 ; 83, 87), the veil material including non-metallic fibers of varied orientation;
(b) compressing the sheets and material together;
(c) curing the sheets without an autoclave;
(d) creating a rigid and three-dimensional part; and
(e) moving trapped air toward peripheral edges of the laminate with the assistance of the veil material during compression and curing.

2. The method of Claim 1 wherein at least one of the sheets (53) is made of a woven carbon fiber, prepreg material.

3. The method of Claim 1 or 2 wherein at least two of the sheets include carbon fiber and resin.

4. The method of any one of Claims 1 to 3 wherein at least an outer one of the sheets includes substantially unidirectional carbon fibers, the method further comprising applying a pigmented paint coating to the outer one sheet.

5. The method of any one of Claims 1 to 4 further comprising creating a class A, automotive vehicle surface (41) at an exposed surface of the sheets.

6. The method of any one of Claims 1 to 5 further comprising compression molding the sheets together in a cycle time less than one hour and without requiring intermediate mold opening between a beginning and end of the compression molding cycle.

7. A method of making a composite (51; 81), the method comprising:
(a) locating a first sheet (53; 83) of fiber prepreg at a position;
(b) locating a second sheet (55; 85) of a randomly oriented and air permeable material at the position in a stacked relationship to the first sheet;
(c) locating a third sheet (57; 87) of fiber prepreg at the position in a stacked relationship to the second sheet;
(d) compression molding the sheets together between preheated tools (103, 105) in an automated press; and
(e) moving trapped air toward peripheral edges of the composite, with the assistance of the second sheet, during molding.

8. The method of Claim 1 wherein the first sheet (53) is made of a woven carbon fiber, prepreg material.

9. The method of Claim 7 or 8 further comprising applying a clear coating to at least one outside surface of the composite after molding.

10. The method of any one of Claims 7 to 9 wherein the first sheet is compressed directly by one of the tools, the tools being metallic.

11. The method of any one of Claims 7 to 10 wherein at least one of the first and third sheets include carbon fiber and resin.

12. The method of any one of Claims 7 to 11 wherein the first sheet includes substantially unidirectional carbon fibers (83), the method further comprising applying a pigmented paint coating to the first sheet after molding.

13. The method of any one of Claims 7 to 12 further comprising creating a class A, automotive vehicle surface (41) at the exposed surface of the first sheet.

14. The method of any one of Claims 7 to 13 further comprising compression molding the sheets together in a cycle time less than one hour and without requiring intermediate tool opening between a beginning and end of the compression molding cycle, the tools (103, 105) comprising a pair of match metal dies of three-dimensional shape.

15. A layered composite part obtainable by the method comprising:
(a) locating a first sheet (53; 83) of fiber prepreg at a position;
(b) locating a second sheet (55) of a randomly oriented and air permeable material at the position in a stacked relationship to the first sheet;
(c) locating a third sheet (57) of fiber prepreg at the position in a stacked relationship to the second sheet;
(d) compression molding the sheets together between preheated tools (103, 105); and
(e) moving trapped air toward peripheral edges of the composite, with the assistance of the second sheet, during molding.

16. The composite part of Claim 15 wherein the molded sheets define an automotive vehicle, exterior body panel.

17. The composite part of Claim 15 or 16 wherein the panel has a class A automotive vehicle surface (41).

18. The composite part of any one of Claims 15 to 17 wherein the first sheet (53) is a woven carbon fiber, prepreg material.

19. The composite part of any one of Claims 16 to 18 further comprising a clear coating located on an outside surface of the first sheet after molding such that a checkerboard-like pattern of the woven material is visible from outside the vehicle.

20. The composite part of any one of Claims 15 to 19 wherein at least one of the first and third sheets (57; 83, 87) is a unidirectional carbon fiber prepreg material.

21. The composite part of Claim 20 wherein both the first and third sheets (83, 87) are unidirectional fiber prepreg materials.

22. The composite part of any one of Claims 15 to 21 wherein the sheets are molded together without an auto clave and without a vacuum.

23. The composite part of any one of Claims 15 to 22 wherein the compression molding cycle time is less than one hour, the tools are closed during the entire molding cycle, and the tools include a metal cavity and a metal core.

24. A panel comprising:
a first sheet (53; 83) including fiber and resin;
a second sheet (55; 85) of fibrous veil material being air permeable and non-metallic; and
a third sheet (57; 87) including fiber and resin, the first and third sheets sandwiching the second sheet in a stacked manner;
wherein the panel is formed by joining the sheets with the second sheet allowing trapped air to move toward peripheral edges of the panel during joining of the sheets.

25. The panel of Claim 24 wherein the joined sheets define an automotive vehicle, exterior body panel.

26. The panel of Claim 24 or 25 wherein the first sheet has a class A automotive vehicle surface (41) after joining.

27. The panel of any one of Claim 24 to 26 wherein the first sheet (53) is a woven carbon fiber, prepreg material.

28. The panel of any one of Claims 25 to 27 further comprising a clear coating located on an outside surface of the first sheet such that a checkerboard-like pattern of a woven material is visible from outside the vehicle.

29. The panel of any one of Claims 24 to 28 wherein at least one of the first and third sheets (57; 83, 87) is a unidirectional carbon fiber prepreg material.

30. The panel of Claim 29 wherein both the first and third sheets (83, 87) are unidirectional fiber prepreg materials.

31. The panel of any one of Claims 24 to 30 wherein the panel is formed by joining the sheets with the sheets being compression molded together without an auto clave and without a vacuum.

32. The panel of any one of Claims 24 to 31 wherein the panel is formed by joining the sheets by compression molding in an automated press, a compression molding cycle time being less than one hour and a metal cavity and a metal core are closed during the entire molding cycle.
